(19)

**Europäisches Patentamt**
**European Patent Office**
**Office européen des brevets**

(11)   **EP 4 207 886 B1**

(12)   **EUROPEAN PATENT SPECIFICATION**

(45) Date of publication and mention
of the grant of the patent:
**25.06.2025   Bulletin 2025/26**

(21) Application number: **20957274.2**

(22) Date of filing: **16.10.2020**

(51) International Patent Classification (IPC):
*H04W 52/14* (2009.01)     *H04W 72/12* (2023.01)
*H04L 1/16* (2023.01)      *H04L 5/00* (2006.01)
*H04W 52/24* (2009.01)

(52) Cooperative Patent Classification (CPC):
**H04W 52/146; H04L 1/1822; H04L 1/1887;**
**H04L 1/1896; H04L 5/001; H04L 5/0053;**
**H04L 5/0092; H04W 52/248; H04W 72/23;**
H04L 5/0055

(86) International application number:
**PCT/CN2020/121677**

(87) International publication number:
**WO 2022/077496 (21.04.2022 Gazette 2022/16)**

(54) **RESOURCE SCHEDULING INDICATION METHOD AND APPARATUS**

VERFAHREN UND VORRICHTUNG ZUR RESSOURCENPLANUNGSANZEIGE

PROCÉDÉ ET APPAREIL D'INDICATION DE PLANIFICATION DE RESSOURCES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**05.07.2023   Bulletin 2023/27**

(73) Proprietor: **Huawei Technologies Co., Ltd.**
**Shenzhen, Guangdong 518129 (CN)**

(72) Inventors:
• **JIA, Qiong**
**Shenzhen, Guangdong 518129 (CN)**

• **ZHANG, Jiayin**
**Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
WO-A1-2018/228502      CN-A- 102 209 374
CN-A- 105 992 361       CN-A- 110 149 172
CN-A- 111 566 971       CN-B- 102 209 374
US-A1- 2014 044 085

EP 4 207 886 B1

## Description

### TECHNICAL FIELD

This application relates to the field of communication technologies, and in particular, to a resource scheduling indication method, a communication apparatus, and a computer-readable storage medium.

### BACKGROUND

With rapid development of wireless communication technologies, spectrum resources of wireless communication systems are increasingly scarce, a low frequency band spectrum cannot meet an increasing service requirement, and more wireless communication systems have performed communication by using a higher frequency band spectrum.

In a 5th generation (5th generation, 5G) mobile communication technology new radio (new radio, NR) system, a plurality of bandwidth parts (bandwidth parts, BWPs) may be configured, and resource scheduling may be performed in the BWPs. When resource scheduling is performed in the NR system, downlink control information (downlink control information, DCI) may indicate to perform resource scheduling. However, one piece of DCI can schedule data on only one carrier. In a carrier aggregation scenario, if a plurality of pieces of data are to be scheduled, a plurality of pieces of DCI are required for scheduling data on a plurality of carriers. This may cause a waste of signaling. Therefore, in a scenario with a large bandwidth, how to reduce signaling overheads is a problem to be resolved.

US 2014/044085 A1 discloses a method and an apparatus for dynamically configuring a resource allocation unit within a PDCCH for an effective resource allocation of multiple cell or multiple component carriers.

CN 102 209 374 B discloses an uplink power control information indication method and a device.

### SUMMARY

This application provides a resource scheduling indication method, a communication apparatus, and a computer-readable storage medium, as defined in the appended set of claims, to reduce signaling overheads and improve data transmission efficiency.

Embodiments of this application may be applied to various mobile communication systems, for example, a new radio (new radio, NR) system, a long term evolution (long term evolution, LTE) system, a long term evolution-advanced (long term evolution-advanced, LTE-A) system, an evolved long term evolution (evolved long term evolution, eLTE) system, and another communication system. This is not specifically limited herein.

### BRIEF DESCRIPTION OF DRAWINGS

FIG. 1 is a schematic diagram of a bandwidth according to an embodiment of this application;
FIG. 2 is a schematic diagram of a carrier group according to an embodiment of this application;
FIG. 3 is a schematic diagram of a network architecture according to an embodiment of this application;
FIG. 4 is a flowchart of a resource scheduling indication method according to an embodiment of this application;
FIG. 5 is a schematic diagram of another carrier group according to an embodiment of this application;
FIG. 6A is a schematic diagram of a segment of consecutive resource blocks according to an embodiment of this application;
FIG. 6B is a schematic diagram of an index of a frequency domain resource according to an embodiment of this application;
FIG. 7 is a schematic diagram of a logical structure of a resource scheduling indication apparatus according to an embodiment of this application;
FIG. 8 is a schematic diagram of a communication apparatus according to an embodiment of this application;
FIG. 9 is a schematic diagram of a logical structure of a resource scheduling indication apparatus according to an embodiment of this application; and
FIG. 10 is a schematic diagram of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) A terminal is also referred to as a terminal device, user equipment (user equipment, UE), a mobile station (mobile station, MS), a mobile terminal (mobile terminal, MT), or the like, and is a device that provides voice and/or data connectivity for a user, for example, may include a handheld device with a wireless connection function or a processing device connected to a wireless modem. The terminal may communicate with a core network through a radio access network (radio access network, RAN), and exchange voice and/or data with the RAN. The terminal may be user equipment (user equipment, UE), a wireless terminal, a mobile terminal, a subscriber unit (subscriber unit), a subscriber station (subscriber station), a mobile station (mobile station), a mobile (mobile), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (also referred to as a "cellular" phone), a computer with a mobile terminal, a portable, pocket-sized, handheld, computer built-in, or vehicle-mounted mobile apparatus, or an intelligent wearable device. For example, the terminal may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal may alternatively include a limited device, for example, a device with low power consumption, a device with a limited storage capability, or a device with a limited computing capability. For example, the terminal includes an information sensing device such as a barcode, radio frequency identification (radio frequency identification, RFID), a sensor, a global positioning system (global positioning system, GPS), or a laser scanner.

By way of example but not limitation, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and that need to collaboratively work with other devices such as smartphones, for example, various smart bands, smart helmets, or smart jewelry for monitoring physical signs. The terminal may alternatively be a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

If the various terminals described above are located on a vehicle (for example, placed in the vehicle or installed in the vehicle), the terminals may be considered as vehicle-mounted terminals. For example, the vehicle-mounted terminal is also referred to as an on board unit (on board unit, OBU). In embodiments of this application, the terminal may further include a relay (relay) Alternatively, this may be understood as that any device that can perform data communication with a base station may be considered as a terminal.

(2) A network device includes, for example, an access network (access network, AN) device such as a base station (for example, an access point), and may be a device that communicates with a wireless terminal over an air interface through one or more cells in an access network. Alternatively, the network device is, for example, a road side unit (road side unit, RSU) in a V2X technology. The RSU may be a fixed infrastructure entity supporting a V2X application, and may exchange a message with another entity supporting the V2X application. The network device may be configured to mutually convert a received over-the-air frame and an internet protocol (IP) packet and serve as a router between the terminal and a remaining part of the access network, where the remaining part of the access network may include an IP network. The network device may further coordinate attribute management of the air interface. For example, the network device may include a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), a wireless fidelity (wireless fidelity, Wi-Fi) access point (access point, AP), or the like, or may include an evolved NodeB (NodeB or eNB or e-NodeB, evolved NodeB) in a long term evolution (long term evolution, LTE) system or an LTE-advanced (LTE-Advanced, LTE-A) system, or may include a next generation NodeB (next generation NodeB, gNB) in a 5th generation (5th generation, 5G) mobile communication technology new radio (new radio, NR) system, or may include a central unit (central unit, CU) and a distributed unit (distributed unit, DU) in a cloud radio access network (cloud radio access network, Cloud RAN) system. This is not limited in embodiments of this application.

(3) A channel bandwidth (channel bandwidth), also referred to as a carrier bandwidth, is a bandwidth of a single radio frequency carrier of a base station or UE.

(4) A configured bandwidth, namely, a configured transmission bandwidth, is an available bandwidth of a base station or UE on a carrier. Generally, a size of the configured bandwidth is a size of an available bandwidth except guard bands (guard bands) at both edges of the carrier. The size of the configured bandwidth is usually represented by a quantity of resource blocks (resource blocks, RBs).

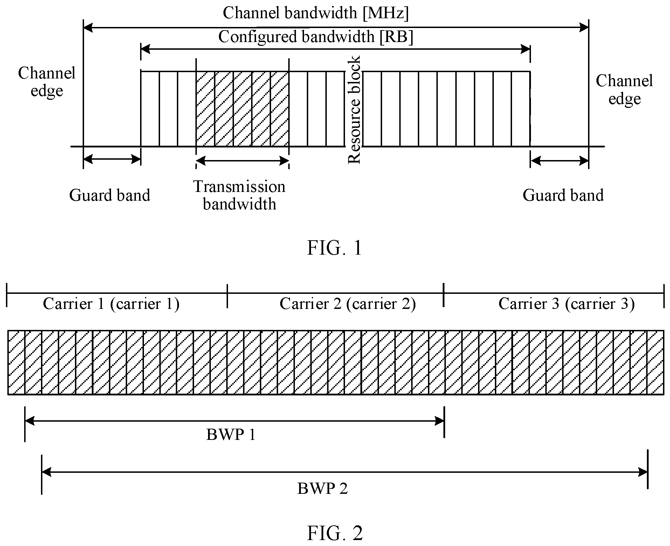

(5) A transmission bandwidth may also be referred to as an activated transmission bandwidth, or may also be referred to as a bandwidth part (bandwidth part, BWP). FIG. 1 is a schematic diagram of a bandwidth according to an embodiment of this application. FIG. 1 shows a channel bandwidth, a configured bandwidth, and a transmission bandwidth (active resource blocks). It should be noted that an actual transmission bandwidth is usually less than or equal to the configured bandwidth.

In a BWP configuration, a start index $RB_{start}$ and a quantity $L_{RB}$ of RBs are defined to indicate a frequency domain resource position and a bandwidth size corresponding to the BWP. In an NR system, a physical resource block (physical resource block, PRB) defined in the BWP is used as a basic unit to implement resource scheduling.

The PRB is a resource block defined in a BWP based on a subcarrier interval configuration, and PRBs are numbered from 0 to $N_{BWP,i}^{size,\mu} - 1$, where i is a number of the BWP, $N_{BWP,i}^{size,\mu}$ represents a quantity of PRBs included in the BWP i, and $\mu$ is the subcarrier interval configuration.

(6) A carrier group is formed by aggregating a plurality of carriers. In one carrier group, a BWP may be flexibly configured, and one BWP may include some or all resource blocks of one or more carriers. As shown in FIG. 2, assuming that a carrier 1, a carrier 2, and a carrier 3 are one carrier group, the three carriers may be aggregated to form an ultra-high bandwidth. For example, assuming that a bandwidth of each carrier is 100 MHz, a bandwidth of 300 MHz may be implemented by aggregating the three carriers. Certainly, it may be understood that bandwidths of each of the plurality of aggregated carriers may be the same or different. For example, FIG. 2 includes a BWP 1 and a BWP 2. The BWP 1 includes some resource blocks of the carrier 1 and all resource blocks of the carrier 2. The BWP 2 includes some resource blocks of the carrier 1, all resource blocks of the carrier 2, and some resource blocks of the carrier 3.

Optionally, resource grids of the plurality of carriers aggregated in the carrier group are aligned, in other words, resource division is performed on the plurality of carriers based on a same resource grid. For example, as shown in FIG. 2, resource blocks of a plurality of carriers to be aggregated are completely consecutively arranged. In this case, the BWP may be flexibly configured in the carrier group, and one BWP may include some or all resource blocks of one or more carriers.

(7) In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects unless otherwise specified. The terms "system" and "network" in embodiments of this application may be used interchangeably.

Unless otherwise specified, ordinal numbers such as "first" and "second" in embodiments of this application are used to distinguish between a plurality of objects, and are not intended to limit a sequence, a time sequence, priorities, or importance of the plurality of objects.

Currently, in an NR system, resource scheduling may be implemented through different DCI formats. For example, physical uplink shared channel (physical uplink shared channel, PUSCH) data may be scheduled through DCI format 0_0, DCI format 0_1, and DCI format 0_2; and physical downlink shared channel (physical downlink shared channel, PDSCH) data may be scheduled through DCI format 1_0, DCI format 1_1, and DCI format 1_2. Generally, one piece of DCI can schedule only one piece of data. In addition, one piece of DCI can schedule data on only one cell (cell) or one carrier.

Currently, during resource division, a carrier is used as a first basic unit, then a BWP is further used as a second basic unit in the carrier, and finally a resource block or a resource block group is used as a third basic unit in the BWP for resource scheduling indication. One piece of resource scheduling indication information can schedule data on only one carrier or cell. In a carrier aggregation scenario, if a plurality of pieces of data are to be scheduled, a plurality of pieces of resource scheduling indication information are required to complete resource scheduling indication. This may cause a waste of signaling.

In view of this, embodiments of this application provide a resource scheduling indication method to schedule a plurality of pieces of data through a single piece of control information, so that a plurality of pieces of resource scheduling indication information are not required. In this way, signaling overheads can be reduced, and a signaling waste can be avoided.

The technical solutions provided in embodiments of this application may be applied to a 5G system, for example, an NR system, or may be applied to a next generation mobile communication system of 5G or another similar communication system. This is not specifically limited.

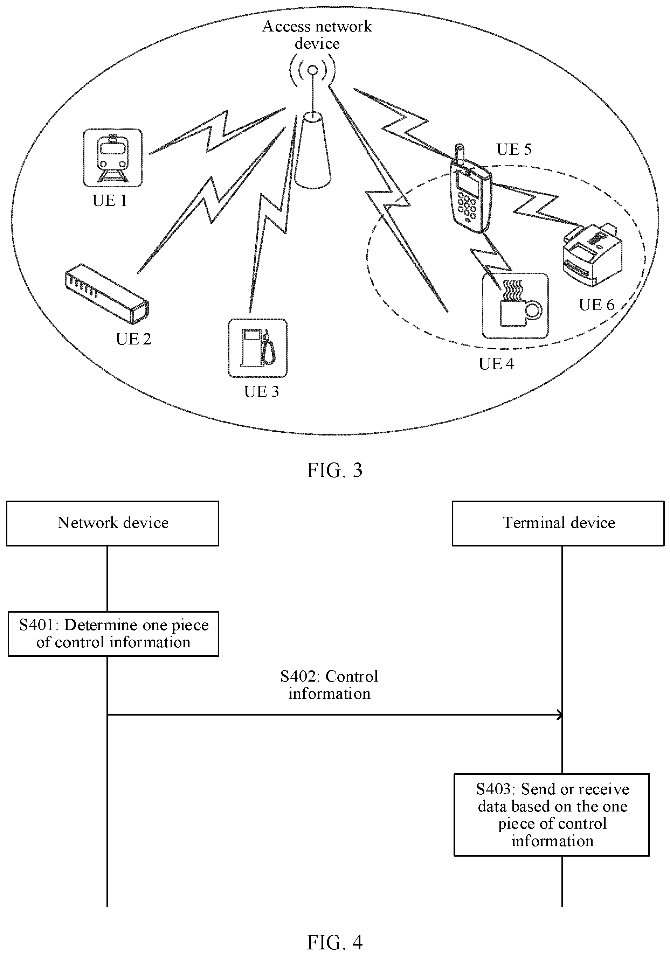

FIG. 3 is a schematic diagram of a network architecture according to an embodiment of this application. FIG. 3 includes an access network device and six terminals (UE 1 to UE 6). A quantity of terminals in FIG. 3 is merely an example, and there may alternatively be less or more terminals. FIG. 3 is merely a schematic diagram, and the network architecture may further include another network device, for example, may further include a wireless relay device and a wireless backhaul device that are not drawn in FIG. 3.

The access network device is an access device through which the terminal is connected to a mobile communication system in a wireless manner, and may be, for example, a base station NodeB, an evolved base station eNodeB, a base station in a 5G communication system, a base station in a future mobile communication system, an access node in a wireless fidelity (wireless-fidelity, Wi-Fi) system, or the like. A specific technology and a specific device form used by the access network device are not limited in embodiments of this application.

The terminal may also be referred to as a terminal device. For example, the terminal may be a cellular phone, a smartphone, a portable computer, a handheld communication device, a handheld computing device, a satellite radio apparatus, a global positioning system, a PDA, and/or any other suitable device used for communication in a wireless communication system, and may all be connected to the access network device.

The access network device and the terminal may be deployed on land, including indoor, outdoor, handheld, or vehicle-mounted, or may be deployed on water, or may be deployed on an airplane, a balloon, or a satellite in the air. An application scenario of the access network device and the terminal is not limited in embodiments of this application.

Embodiments of this application may be applied to downlink signal transmission, and may also be applied to uplink signal transmission. For downlink signal transmission, a sending device is an access network device, and a corresponding receiving device is a terminal. For uplink signal transmission, a sending device is a terminal, and a corresponding receiving device is an access network device. Certainly, embodiments of this application may be further applied to signal transmission for device-to-device (device-to-device, D2D) communication. For D2D signal transmission, a sending device is a terminal, and a corresponding receiving device is also a terminal. For example, the three terminals (UE 4, UE 5, and UE 6) included in a dotted line area in FIG. 3 may be used in D2D signal transmission. A direction of signal transmission is not limited in embodiments of this application.

The technical solutions provided in embodiments of this application are described below in detail with reference to the accompanying drawings.

FIG. 4 is a flowchart of a resource scheduling indication method according to an embodiment of this application. As shown in FIG. 4, the method includes the following steps.

S401: A network device determines one piece of control information.

S402: The network device sends the one piece of control information to a terminal device. Correspondingly, the terminal device receives the one piece of control information sent by the network device.

S403: The terminal device sends or receives data based on the one piece of control information.

It may be understood that data sending corresponds to uplink data transmission, and data receiving corresponds to downlink data transmission.

The following describes in detail the steps in the embodiment shown in FIG. 4.

In this embodiment of this application, the control information may be DCI or sidelink control information (sidelink control information, SCI). Specifically, a PDSCH or a PUSCH may be scheduled through the DCI, and a PSSCH may be scheduled through the SCI. It may be understood that the PDSCH corresponds to downlink data, the PUSCH corresponds to uplink data, and the PSSCH corresponds to sidelink data. For ease of description, the PDSCH, the PUSCH, and the PSSCH are collectively referred to as "data" below.

Specifically, the control information may include resource scheduling indication information of a plurality of pieces of data at different frequency domain positions, and the resource scheduling indication information may be used by the network device to perform resource scheduling on the plurality of pieces of data. Because a carrier aggregation scenario includes a plurality of carriers, the control information may include the following two cases.

Case 1: One piece of control information includes resource scheduling indication information of a plurality of pieces of data on different carriers. In this case, the plurality of pieces of data on the different carriers are a plurality of pieces of data on a plurality of carriers. FIG. 2 is used as an example. Assuming that data on the carrier 1 is data 1, and data on the carrier 2 is data 2, the control information may include resource scheduling indication information of the data 1 on the carrier 1 and resource scheduling indication information of the data 2 on the carrier 2.

Case 2: One piece of control information includes resource scheduling indication information of a plurality of pieces of data on a same carrier. In this case, the plurality of pieces of data may be a plurality of pieces of data at different frequency domain positions on a same carrier. FIG. 2 is used as an example. Assuming that data on the carrier 1 includes data 1 and data 2, and the data 1 and the data 2 are located at different frequency domain positions on the carrier 1, the control information may include resource scheduling indication information of the data 1 on the carrier 1 and the data 2 on the carrier 1.

It should be noted that a plurality of pieces of data may be respectively mapped to a plurality of carriers, that is, each piece of data is mapped to a single carrier. Certainly, a plurality of pieces of data may alternatively be mapped to different carriers in a cross-carrier manner, that is, one piece of data may be mapped to two carriers. This is not specifically limited in this application.

In this embodiment of this application, the resource scheduling indication information may include at least one of the following information: carrier group information corresponding to the different carriers, BWP indication information corresponding to the plurality of pieces of data, hybrid automatic repeat request (hybrid automatic repeat request, HARQ) process information, transmit power control indication information, modulation and coding scheme indication information, new data indicator information, channel access indication information, time domain resource indication information, and frequency domain resource indication information.

In a possible implementation, the resource scheduling indication information may be represented through one or more fields in the control information (for example, DCI).

The following describes in detail the resource scheduling indication information listed above.

(1) Carrier group information

A carrier group may be carrier groups corresponding to the different carriers. For example, FIG. 2 is used as an example. FIG. 2 includes the carrier 1, the carrier 2, and the carrier 3, and may include, for example, the following carrier groups: a carrier group 1 formed by the carrier 1 and the carrier 2, a carrier group 2 formed by the carrier 2 and the carrier 3, and a carrier group 3 formed by the carrier 1, the carrier 2, and the carrier 3.

In a possible implementation, a field (for example, a carrier group index) may be defined to indicate a carrier group whose data is to be scheduled through the scheduling indication information. It should be noted that the field may be a newly defined field, or an existing field may be reused. This is not limited in this application.

For example, when a value of the field is "0", it may indicate to schedule data of the carrier group 1; when a value of the field is "1", it may indicate to schedule data of the carrier group 2. Alternatively, when a value of the field is "1", it may indicate to schedule data of the carrier group 1; when a value of the field is "2", it may indicate to schedule data of the carrier group 2. It may be understood that the foregoing is merely an example, and this application is not limited thereto.

(2) BWP indication information

Resource scheduling is performed based on a carrier that is in a BWP. Therefore, in this application, the BWP indication information may indicate a BWP on which data is to be scheduled through the scheduling indication information. In a possible implementation, a bandwidth part indicator field in a DCI format in a current NR system may be reused to indicate a BWP on which data is to be scheduled.

For example, FIG. 2 is used as an example. When a value of the bandwidth part indicator field is "1", it may indicate to schedule data on the BWP 1; when a value of the bandwidth part indicator field is "2", it may indicate to schedule data on the BWP 2.

(3) HARQ process information

In some embodiments, the HARQ process information may include first indication information, and the first indication information may indicate HARQ process identifiers of the plurality of pieces of data.

When the HARQ process identifiers of the plurality of pieces of data are the same, the HARQ process information may include one piece of the first indication information. That is, if the scheduling indication information includes one HARQ process identifier, it indicates that the HARQ process identifiers of the plurality of pieces of data to be scheduled are the same.

For example, a field (for example, a HARQ process number) may be defined in the control information. It is assumed that the field includes M bits (for example, M=4), and a value of the field corresponds to one HARQ process identifier. If the scheduling indication information includes only one field value 4, it indicates that the HARQ process identifiers that are of the plurality of pieces of data and that are indicated by the scheduling indication information are the same.

When the HARQ process identifiers of the plurality of pieces of data are different, the HARQ process information may include a plurality of pieces of indication information. That is, if the scheduling indication information includes a plurality of HARQ process identifiers, it indicates that the HARQ process identifiers of the plurality of pieces of data to be scheduled are different. In other words, each of the plurality of pieces of data may correspond to one HARQ process identifier.

For example, a field (for example, a HARQ process number) may be defined in the control information. It is assumed that the field includes M bits, and a value of the field corresponds to one HARQ process identifier. If the scheduling indication information includes a plurality of field values, it indicates that the HARQ process identifiers of the plurality of pieces of data indicated by the scheduling indication information are different.

In a possible implementation, it is assumed that the field includes N*M bits, where N is a quantity of carriers included in a BWP, the field is sorted in descending order of bits, and then every M bits correspond to one HARQ process identifier. That is, if N=2 and M=3, the field may include 6 bits, and every 3 bits may correspond to one HARQ process identifier.

In some other embodiments, the HARQ process information may include second indication information, and the second indication information may indicate a HARQ process identifier of one of the plurality of pieces of data. For example, a field (for example, a HARQ process number) may be defined in the control information. It is assumed that the field includes M bits, and a value of the field may correspond to a HARQ process identifier of the first data of the plurality of pieces of data. In this case, a HARQ process identifier of another piece of data may be obtained through calculation based on the HARQ process identifier of the first data. It should be noted that the value of the field may alternatively correspond to a HARQ process identifier of any one of the plurality of pieces of data. In this case, a HARQ process identifier of another piece of data may also be obtained through calculation based on the value of the field.

For example, it is assumed that the value of the field is "1", that is, the HARQ process identifier of the first data of the plurality of pieces of data is 1. In this case, a HARQ process identifier of the second data is the HARQ process identifier of the first data plus 1, that is, the HARQ process identifier of the second data is 2. A HARQ process identifier of another piece of data can be deduced by analogy. It may be understood that the plurality of pieces of data may be sorted in ascending order in frequency domain, and the first data may be data at the lowest position in frequency domain. Certainly, sorting may alternatively be performed in another order. This is not limited in this application.

(4) Transmit power control (transmit power control, TPC) indication information

In a possible implementation, same TPC indication information may be used for the plurality of pieces of data to be scheduled. That is, there may be one field value of the control information. Certainly, different TPC indication information may alternatively be used for the plurality of pieces of data to be scheduled. That is, each piece of data may correspond to one piece of TPC indication information.

In other words, if there is one field value, it indicates that the same TPC indication information is used for the plurality of pieces of data to be scheduled; if there are a plurality of field values, it indicates that different TPC indication information is used for the plurality of pieces of data that are to be scheduled and that are on a plurality of carriers.

(5) Modulation and coding scheme (modulation and coding scheme, MCS) indication information

In this embodiment of this application, same or different MCS indication information may be used for the plurality of pieces of data to be scheduled. For example, if there is one field value (for example, 1) corresponding to the MCS indication information, it indicates that MCS indication information of the plurality of pieces of data to be scheduled is the same; if there are a plurality of field values (for example, 1, 2, and 3) corresponding to the MCS indication information, it indicates that MCS indication information of the plurality of pieces of data to be scheduled is different. It should be noted that the plurality of field values may be in one-to-one correspondence with the plurality of pieces of data.

(6) New data indicator (new data indicator, NDI) information

In this embodiment of this application, the NDI information may indicate that the data is newly transmitted data or retransmitted data. For example, when a value of an NDI field is "0", the scheduling indication information indicates that the plurality of pieces of data are newly transmitted data; when a value of an NDI field is "1", the scheduling indication information indicates that the plurality of pieces of data are retransmitted data. Alternatively, when a value of an NDI field is "1", the scheduling indication information indicates that the plurality of pieces of data are newly transmitted data; when a value of an NDI field is "0", the scheduling indication information indicates that the plurality of pieces of data are retransmitted data.

In another example, when there is one NDI field value, the scheduling indication information indicates that all the plurality of pieces of data are newly transmitted data or retransmitted data. For example, 0 indicates that all the plurality of pieces of data are newly transmitted data, and 1 indicates that all the plurality of pieces of data are retransmitted data. When there are a plurality of NDI field values, each value indicates whether one of the plurality of pieces of data is newly transmitted data or retransmitted data. For example, four pieces of data are scheduled, and NDI field values correspond to four values: 0010. This may indicate that the third data is retransmitted data, and other data is newly transmitted data.

(7) Channel access indication information

On an unlicensed spectrum, a specific parameter for performing listen-before-talk (listen-before-talk, LBT) LBT by a terminal device needs to be indicated. For example, the specific parameter includes one or more of parameters such as an LBT type and a channel access priority. In a possible implementation, same or different channel access indication information may be used for the plurality of pieces of data to be scheduled. For example, if there is one field value (for example, 1) corresponding to the channel access indication information, it indicates that channel access indication information of the plurality of pieces of data to be scheduled is the same; if there are a plurality of field values (for example, 1, 2, and 3) corresponding to the channel access indication information, it indicates that channel access indication information of the plurality of pieces of data to be scheduled is different. It should be noted that the plurality of field values may be in one-to-one correspondence with the plurality of pieces of data.

(8) Time domain resource indication information

In a possible implementation, same or different time domain resource indication information may be used for the plurality of pieces of data to be scheduled. In an example, if there is one field value corresponding to the time domain resource indication information, it indicates that time domain resource indication information of the plurality of pieces of data to be scheduled is the same; if there are a plurality of field values corresponding to the time domain resource indication information, it indicates that time domain resource indication information of the plurality of pieces of data to be scheduled is different. It should be noted that the plurality of field values may be in one-to-one correspondence with the plurality of pieces of data.

(9) Frequency domain resource indication information

In some embodiments, the frequency domain resource indication information may indicate a set of frequency domain resources of the plurality of pieces of data on the different carriers. If there is one field value corresponding to the frequency domain resource indication information, it indicates that frequency domain resources of the plurality of pieces of data may be determined through the field value. For example, frequency domain resource positions of the plurality of pieces of data to be scheduled are the same, or relative positions of frequency domain resources of the plurality of pieces of data to be scheduled are the same, or the field value indicates a collection of the frequency domain resources of the plurality of pieces of data. If there are a plurality of field values corresponding to the frequency domain resource indication information, it indicates that frequency domain resource positions of the plurality of pieces of data to be scheduled are different. It should be noted that, if there are the plurality of field values corresponding to the frequency domain resource indication information, the plurality of pieces of data may be in one-to-one correspondence with field values corresponding to the frequency domain resource indication information.

In some other embodiments, the frequency domain resource indication information may indicate a frequency domain resource position of one of the plurality of pieces of data. For example, the field value corresponding to the frequency domain resource indication information may be a frequency domain resource position of any one of the plurality of pieces of data. In this case, a frequency domain resource position of another piece of data may be obtained through calculation based on the field value.

For example, it is assumed that a value of a field (frequency domain resource allocation, FDRA) corresponding to the frequency domain resource indication information is "1", and the field value is a frequency domain resource position of the first data of the plurality of pieces of data. In this case, a frequency domain resource position of the second data is the frequency domain resource position of the first data plus 1, that is, the frequency domain resource position of the second data is 2. A frequency domain resource position of another piece of data may be obtained by analogy. It may be understood that "1" herein is merely for ease of understanding. In actual application, the value depends on a data size, and a preset offset value may be agreed upon to infer a frequency domain resource position of another piece of data.

Certainly, it may be understood that the foregoing information is only some examples. In embodiments of this application, another piece of indication information may be further included. This is not limited thereto.

According to the foregoing embodiment, the plurality of pieces of data on the different carriers may be scheduled through the one piece of control information. Compared with a current technology, in this embodiment, if the plurality of pieces of data on the different carriers need to be scheduled, scheduling of the plurality of pieces of data may be completed without the need of a plurality of pieces of control information, thereby greatly reducing signaling overheads and improving communication efficiency.

In some scenarios, resource grids of a plurality of carriers aggregated in a carrier group are aligned, in other words, resource division is performed on the plurality of carriers based on a same resource grid. For example, as shown in FIG. 2, resource blocks of the plurality of aggregated carriers are completely consecutively arranged. For example, in an order from left to right, there is no interval between the last resource block of the carrier 1 and the first resource block of the carrier 2 in frequency domain.

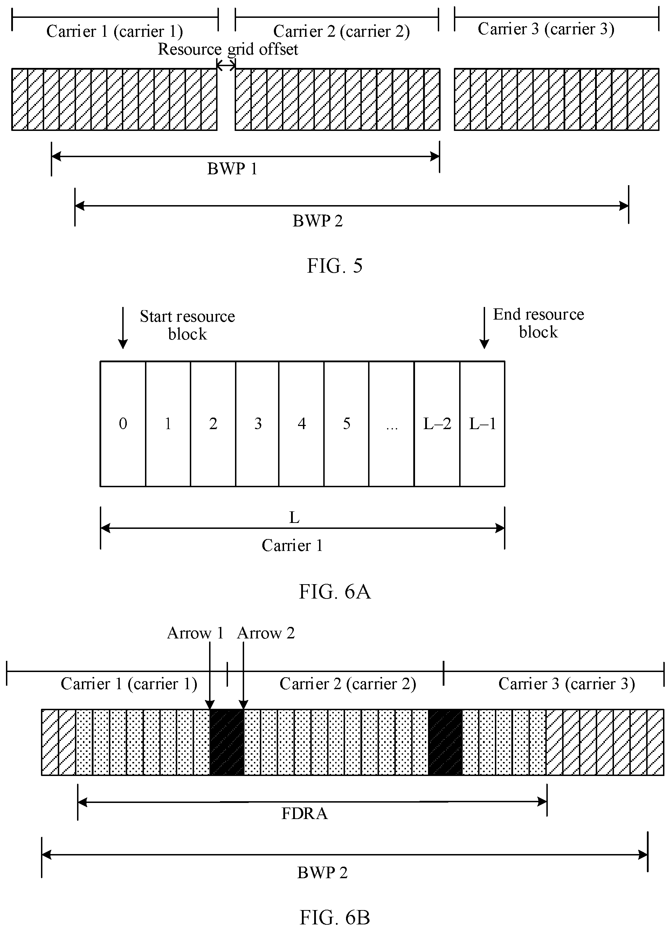

In some other scenarios, resource grids of a plurality of carriers aggregated in a carrier group are not aligned. For example, as shown in FIG. 5, resource blocks of the plurality of aggregated carriers are not completely consecutively arranged. For example, there is an interval between the last resource block of the carrier 1 and the first resource block of the carrier 2 in frequency domain. In this case, a network device may determine a common resource grid. If the common resource grid is in a resource division manner corresponding to the carrier 1, interval information corresponds to an offset of a resource grid corresponding to the carrier 2 relative to the common resource grid, where the offset is referred to as a resource grid offset. The network device notifies, through a system message and/or configuration information (such as radio resource control (radio resource control, RRC) signaling) and/or dynamic indication information (the control information such as DCI), the terminal device of common resource grid information and information about a resource grid offset corresponding to a carrier i.

Correspondingly, the terminal device may determine an accurate position of a resource on the carrier i based on the common resource grid information and the resource grid offset of the carrier i. In some scenarios, even if there is an interval between resource blocks corresponding to neighboring carriers, indexes of the resource blocks of the neighboring carriers may still be consecutive. For example, there is an interval between the last resource block of the carrier 1 and the first resource block of the carrier 2 in frequency domain. For example, an index of the last resource block of the carrier 1 is RB#12, and an index of the first resource block of the carrier 2 is RB#13. Index values of the resource blocks of the carriers are still consecutive.

The following describes how to determine a frequency domain resource position of each of the plurality of pieces of data based on the frequency domain resource indication information.

In a possible implementation, the frequency domain resource indication information may include a resource indicator value (resource indicator value, RIV), or the frequency domain resource indication information may be implemented by using an RIV. An index $RB_{start}$ of a start resource block in a segment of consecutive resource blocks and a quantity L of the resource blocks may be determined based on the RIV. Further, the terminal device may determine, based on $RB_{start}$ and L, that indexes of the consecutive resource blocks are from $RB_{start}$ to $RB_{start}+L-1$. For example, FIG. 6A is a schematic diagram of a segment of consecutive resource blocks. It is assumed that the resource blocks are numbered from 0, and a resource block 0 indicated by an arrow in the figure may be a start resource block. It may be understood that the consecutive resource blocks may be a segment of consecutive resource blocks on a single carrier, or may be a segment of consecutive resource blocks on a plurality of carriers. It may be understood that the consecutive resource blocks may be a plurality of physically consecutive resource blocks without an interval, or may be logically consecutive resource blocks, in other words, index numbers corresponding to the resource blocks are consecutive.

In this application, the frequency domain resource indication information may include one or more RIVs. When the frequency domain resource indication information includes a value of one RIV, the RIV may indicate the set of the frequency domain resources of the plurality of pieces of data, or indicate a union set of the frequency domain resources of the plurality of pieces of data; or the RIV indicates a frequency domain resource of one of the plurality of pieces of data. When the frequency domain resource indication information includes values of a plurality of RIVs, each RIV value may correspond to one of the plurality of pieces of data. In other words, a frequency domain resource position of each piece of data may be determined based on the RIV value. That is, if RIVs are the same, there is only one RIV value; if RIVs are different, there are a plurality of RIV values.

The following two cases are described in detail below.

Case 1: The RIV indicates the set or the union set of the frequency domain resources of the plurality of pieces of data on the different carriers.

It may be understood that the union set (also referred to as a "collection") refers to a sum of the frequency domain resources of the plurality of pieces of data.

It is assumed that a BWP includes N (N≥1) carriers, $RB_{carrier,i}^{start}$ represents a start resource index of an $i^{th}$ (i=0 to N-1) carrier in the BWP, $RB_{carrier,i}^{end}$ represents an end resource index of the the the $i^{th}$ carrier, $RB_{DATA,i}^{start}$ represents a start resource index corresponding to data that is on the $i^{th}$ carrier, and $RB_{DATA,i}^{end}$ represents an end resource index corresponding to data that is on the $i^{th}$ carrier.

The set that is of the frequency domain resources and that is determined based on the RIV is L consecutive RBs starting from $RB_{start}$ as a start RB.

In this way, a relationship between the start resource index of the $i^{th}$ carrier and the start resource index corresponding to the data that is on the $i^{th}$ carrier may satisfy the following formula:

$$RB_{DATA,i}^{start} = \max(RB_{start}, RB_{carrier,i}^{start})$$

A relationship between the end resource index of the i<sup>th</sup> carrier and the end resource index corresponding to the data that is on the i<sup>th</sup> carrier may satisfy the following formula:

$$RB_{DATA,i}^{end} = \min(RB_{start} + L - 1, RB_{carrier,i}^{end})$$

The start resource index and the end resource index that correspond to the data that is on the i<sup>th</sup> carrier may be obtained based on the foregoing two formulas. In this way, a frequency domain resource position of each piece of data may be determined.

In this indication manner, frequency domain resource indication of the plurality of pieces of data may be implemented through one resource indication value, thereby reducing overheads and improving communication efficiency.

Case 2: The RIV indicates the frequency domain resource position of one of the plurality of pieces of data on the different carriers.

It is assumed that a BWP includes N (N≥1) carriers, $RB_{carrier,i}^{start}$ represents a start resource index of an i<sup>th</sup> (i=0 to N-1) carrier in the BWP, $RB_{carrier,i}^{end}$ represents an end resource index of the the i<sup>th</sup> carrier, $RB_{DATA,i}^{start}$ represents a start resource index corresponding to data that is on the i<sup>th</sup> carrier, and $RB_{DATA,i}^{end}$ represents an end resource index corresponding to data that is on the i<sup>th</sup> carrier.

Similarly, a set that is of frequency domain resources and that is determined based on the RIV is L consecutive RBs starting from RB<sub>start</sub> as a start RB. However, in this case, a start RB index corresponding to RB<sub>start</sub> is an index relative to the i<sup>th</sup> carrier.

In this way, a relationship between the start resource index of the i<sup>th</sup> carrier and the start resource index corresponding to the data that is on the i<sup>th</sup> carrier may satisfy the following formula:

$$RB_{DATA,i}^{start} = RB_{start} + RB_{carrier,i}^{start}$$

A relationship between the end resource index of the i<sup>th</sup> carrier and the end resource index corresponding to the data that is on the i<sup>th</sup> carrier may satisfy the following formula:

$$RB_{DATA,i}^{end} = RB_{start} + RB_{carrier,i}^{start} + L - 1; \text{ or}$$

$$RB_{DATA,i}^{end} = \min(RB_{start} + RB_{carrier,i}^{start} + L - 1, RB_{carrier,i}^{end}).$$

$RB_{start} + RB_{carrier,i}^{start}$ represents the start resource index of the data that is on the i<sup>th</sup> carrier.

It should be noted that, in the second case, the start resource index determined based on RIV indication information is a start resource index relative to each carrier. In this manner, frequency domain resource indication of the plurality of pieces of data is implemented by using the same indication information, so that overheads can be reduced, and communication efficiency can be improved.

Because there is a guard interval (also referred to as a guard band (guard band)) between any two neighboring carriers in N carriers, as shown in FIG. 6B, a black area in the figure is a guard interval, and an actual start resource index and an actual end resource index are resource indexes obtained by removing the guard interval. For example, a start resource index of the carrier 2 is a start resource index indicated by an arrow 2. It should be noted that, in some scenarios, the start resource index and the end resource index in the foregoing calculation formulas are the actual start resource index and the actual end resource index, namely, the resource indexes obtained by removing the guard interval.

It may be understood that, in some scenarios, a size of the guard interval shown in the figure may be an integer multiple of a resource block, and a resource block included in the guard interval has a sequential index with another resource block. FIG. 6B is used as an example. It is assumed that the last resource block of a carrier 1 is RB#9, that is, a corresponding index is 9. The guard interval includes two resource blocks, and corresponding indexes are 10 and 11, that is, the two resource blocks are sequentially numbered together with other resource blocks. An index corresponding to the first resource block of a carrier 2 is 12.

In some other scenarios, a resource block included in the guard interval does not have a sequential index with another resource block. FIG. 6B is still used as an example. It is assumed that the last resource block of a carrier 1 is RB#9, that is, a corresponding index is 9. The guard interval includes two resource blocks that are not sequentially indexed. An index corresponding to the first resource block of a carrier 2 is 10, and the guard interval is ignored. In this case, the indexes of the last resource block of the carrier 1 and the first resource block of the carrier 2 are still consecutive.

It may be understood that a resource block set corresponding to an FDRA shown in FIG. 6B is a set that is of frequency domain resources of a plurality of pieces of data and that is indicated by an RIV.

In a possible implementation, an actual start resource index corresponding to the data that is on the the $i^{th}$ carrier=a start resource index indicated by the RIV+offset information. For example, the offset information is the size of the guard interval, and may be represented by a quantity of resource blocks, or may be represented by a quantity of another resource unit (for example, a resource element (resource element, RE), or a subcarrier). Alternatively, the offset information is indicated by indication information other than the RIV. If the indicated start resource index is 0, for example, a start resource index indicated by an arrow 1 in the figure, and the guard interval is one RB, that is, the offset information is 1, the actual start resource index=0+1=1. That is, the start resource index indicated by the arrow 2 on the carrier 2 is 1.

It may be understood that if a set that is of resource blocks corresponding to a plurality of pieces of data and that is indicated by one or more RIVs is a set A, and a set of available resources on the $i^{th}$ carrier in a BWP is a set B, a frequency domain resource corresponding to data that is on the $i^{th}$ carrier and that is in the plurality of pieces of data to be scheduled is an intersection of the set A and the set B.

In a possible implementation, the frequency domain resource indication information may include a bitmap (bitmap). The following two cases may be included based on different quantities of bitmaps.

Case 1: When the frequency domain resource indication information includes one bitmap, the bitmap may indicate a set of resource blocks corresponding to the plurality of pieces of data.

Each bit in the bitmap corresponds to one or more resource blocks. For example, it is assumed that each bit in the bitmap corresponds to one resource block, and a BWP includes four resource blocks. When a bit value is "1", it indicates that a resource block is scheduled; when a bit value is "0", it indicates that the resource block is not scheduled. In this case, "1101" may indicate that a resource block 1, a resource block 2, and a resource block 4 in the BWP are scheduled.

Certainly, it may be understood that the foregoing descriptions are merely an example. In another example, when a bit value is "1", it indicates that a resource block is not scheduled; when a bit value is "0", it indicates that a resource block is scheduled. This is not limited in this application.

It is assumed that the BWP includes N (N≥1) carriers, $RB_{carrier,i}^{start}$ represents a start resource index of the $i^{th}$ (i=0 to N-1) carrier in the BWP, and $RB_{carrier,i}^{end}$ represents an end resource index of the the $i^{th}$ carrier. In this case, a set of available resources on the $i^{th}$ carrier in the BWP is $RB_{carrier,i}^{start}$ to $RB_{carrier,i}^{end}$. It should be noted that the start resource index and the end resource index herein represent an actual start resource index and an actual end resource index. Specifically, for the actual start resource index and the actual end resource index, refer to the foregoing descriptions. Details are not described herein again.

If the set that is of the resource blocks corresponding to the plurality of pieces of data and that is indicated by the bitmap is a set A, and the set of the available resources on the $i^{th}$ carrier in the BWP is a set B, a frequency domain resource corresponding to data that is on the $i^{th}$ carrier and that is in the plurality of pieces of data to be scheduled is an intersection of the set A and the set B.

Case 2: When the frequency domain resource indication information includes a plurality of bitmaps, each bitmap may indicate a set of resource blocks corresponding to data that is on each carrier. In other words, each of the plurality of bitmaps is in one-to-one correspondence with the set of the resource blocks corresponding to data that is on each carrier.

A length of each bitmap depends on a size of an available resource in each carrier. If the available resource in the carrier is larger, the bitmap length is longer; if the available resource in the carrier is smaller, the bitmap length is shorter. In addition, each bit in each bitmap may correspond to one or more resource blocks.

For example, it is assumed that a carrier 1 included in a BWP includes four resource blocks, and when a bit value is "1", it indicates that a resource block is scheduled; when a bit value is "0", it indicates that a resource block is not scheduled. In this case, "1101" may indicate that a resource block 1, a resource block 2, and a resource block 4 in the carrier 1 are scheduled, and a resource block 3 is not scheduled.

Based on the foregoing embodiments, the terminal device may determine, based on the frequency domain resource indication information, the frequency domain resource positions corresponding to the plurality of pieces of data to be scheduled, and may indicate the resource positions of the plurality of pieces of data through one piece of indication information, thereby improving communication efficiency.

Further, in a scenario in which a BWP includes some or all resource blocks of a plurality of carriers, a search space corresponding to the control information may be limited to a single carrier, and the network device may select one or more of the plurality of carriers included in the BWP as a primary carrier to configure the search space. For example, if the BWP includes three carriers such as a carrier 1, a carrier 2, and a carrier 3, the network device may select at least one of the three carriers as a primary carrier, for example, select the carrier 1 as the primary carrier.

It may be understood that the search space is a corresponding search resource range in which the terminal device blindly detects the control information, that is, the terminal device blindly detects the control information in the search space. The search space is fixedly configured on a carrier, so that blind detection overheads of the terminal device can be effectively reduced.

The following describes apparatuses used to implement the foregoing method in embodiments of this application with reference to the accompanying drawings. Therefore, all the foregoing content may be used in subsequent embodiments. Repeated content is not described in detail again.

In embodiments of this application, a device may be divided into functional units based on the foregoing method example. For example, each functional unit may be obtained through division based on each corresponding function, or two or more functions may be integrated into one processing unit. The integrated unit may be implemented in a form of hardware, or may be implemented in a form of a software functional unit. It should be noted that, in this embodiment of this application, division into the units is an example, and is merely logical function division. In actual implementation, another division manner may be used.

Based on a same concept as that in the foregoing method embodiment, an embodiment of this application provides a resource scheduling indication apparatus.

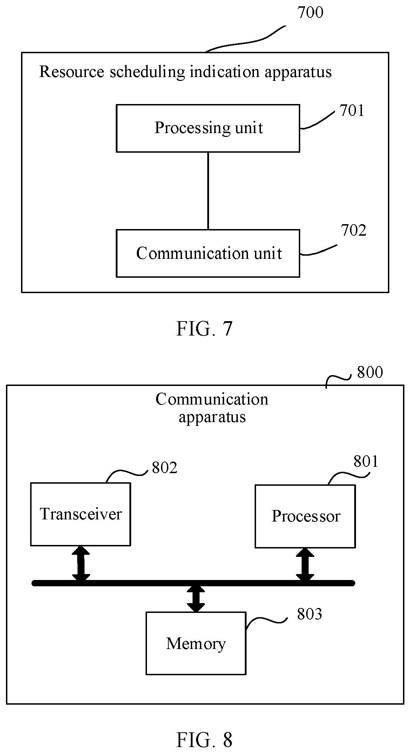

When an integrated unit is used, FIG. 7 is a schematic diagram of a logical structure of a resource scheduling indication apparatus. The resource scheduling indication apparatus may be used in a network device. As shown in FIG. 7, a resource scheduling indication apparatus 700 includes a processing unit 701 and a communication unit 702.

The processing unit 701 is configured to determine one piece of control information, where the one piece of control information includes resource scheduling indication information of a plurality of pieces of data on different carriers, and the resource scheduling indication information is used by the network device to perform resource scheduling on the plurality of pieces of data; and the communication unit 702 is configured to send the one piece of control information determined by the processing unit 701 to a terminal device.

In a possible implementation, the resource scheduling indication information includes at least one of the following information: carrier group information corresponding to the different carriers, bandwidth part BWP indication information corresponding to the plurality of pieces of data, hybrid automatic repeat request HARQ process information, transmit power control indication information, modulation and coding scheme indication information, new data indicator information, channel access indication information, time domain resource indication information, and frequency domain resource indication information.

In a possible implementation, when the resource scheduling indication information includes the HARQ process information, the HARQ process information includes first indication information, and the first indication information indicates HARQ process identifiers of the plurality of pieces of data; or the HARQ process information includes second indication information, and the second indication information indicates a HARQ process identifier of one of the plurality of pieces of data.

In a possible implementation, when the resource scheduling indication information includes the frequency domain resource indication information, the frequency domain resource indication information indicates a set of frequency domain resources of the plurality of pieces of data on the different carriers; or the frequency domain resource indication information indicates a frequency domain resource of one of the plurality of pieces of data.

In a possible implementation, the frequency resource indication information includes a first resource indication value RIV; and the first RIV indicates the set of frequency domain resources of the plurality of pieces of data; or the first RIV indicates the frequency domain resource of one of the plurality of pieces of data.

In a possible implementation, the control information is downlink control information DCI or sidelink control information SCI.

When a hardware form is used for implementation, in this embodiment of this application, the communication unit 702 may be a communication interface, a receiver, a transceiver circuit, or the like. The communication interface is a general term, and may include one or more interfaces.

When the communication unit 702 is a transceiver, the resource scheduling indication apparatus 700 in this embodiment of this application may be shown in FIG. 8. FIG. 8 is a communication apparatus 800 according to an embodiment of this application. For example, the communication apparatus may be a network device. The communication apparatus 800 may include a processor 801, a transceiver 802, and a memory 803. The memory 803 is configured to store instructions or a program, and the processor 801 is configured to execute the instructions or the program stored in the memory 803. The transceiver 802 is configured to perform the operation performed by the communication unit 702 in the foregoing embodiment.

It should be understood that the resource scheduling indication apparatus 700 or the communication apparatus 800 according to embodiments of this application may correspond to the network device in the embodiment shown in FIG. 4. In addition, operations and/or functions of units in the resource scheduling indication apparatus 700 or the communication apparatus 800 are respectively intended to implement corresponding procedures in the embodiment shown in FIG. 4. For brevity, details are not described herein again.

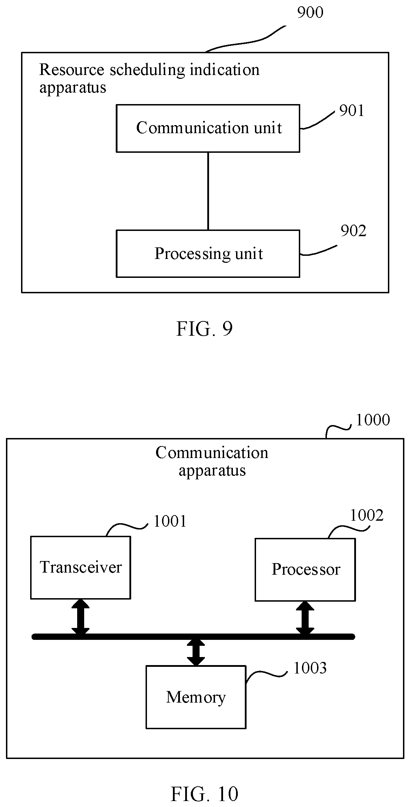

FIG. 9 is a schematic diagram of a logical structure of a resource scheduling indication apparatus that is further provided in an embodiment of this application. Refer to FIG. 9. A resource scheduling indication apparatus 900 includes a communication unit 901 and a processing unit 902. In an example, the apparatus 900 is configured to implement functions of the terminal device in the foregoing method.

The communication unit 901 is configured to receive one piece of control information sent by a network device, where the one piece of control information includes resource scheduling indication information of a plurality of pieces of data on different carriers, and the resource scheduling indication information is used by the network device to perform resource scheduling on the plurality of pieces of data; and the processing unit 902 is configured to perform data sending or data receiving based on the one piece of control information received by the communication unit 901.

When a hardware form is used for implementation, in this embodiment of this application, the communication unit 901 may be a communication interface, a receiver, a transceiver circuit, or the like. The communication interface is a general term, and may include one or more interfaces.

When the communication unit 901 is a transceiver, the resource scheduling indication apparatus 900 in this embodiment of this application may be shown in FIG. 10. FIG. 10 is a communication apparatus 1000 according to an embodiment of this application. For example, the communication apparatus may be a terminal device. The communication apparatus 1000 may include a transceiver 1001, a processor 1002, and a memory 1003. The memory 1003 stores instructions or a program, and the transceiver 1001 is configured to perform the operation performed by the communication unit 901 in the foregoing embodiment. The processor 1002 is configured to execute the instructions or program stored in the memory 1003.

It should be understood that the resource scheduling indication apparatus 900 or the communication apparatus 1000 according to embodiments of this application may correspond to the terminal device in the embodiment shown in FIG. 4. In addition, operations and/or functions of units in the resource scheduling indication apparatus 900 or the communication apparatus 1000 are respectively intended to implement corresponding procedures in the embodiment shown in FIG. 4. For brevity, details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification is intended to include but is not limited to these memories and any memory of another proper type.

Based on a same concept as that in the foregoing method embodiment, an embodiment of this application further provides a communication apparatus. The apparatus may include a processor and an interface circuit; the interface circuit is configured to: receive code instructions and transmit the code instructions to the processor; and the processor is configured to run the code instructions to perform an operation performed by the network device in any one of the foregoing method embodiment and the possible implementations of the method embodiment.

Based on a same concept as that in the foregoing method embodiment, an embodiment of this application further provides a communication apparatus. The apparatus may include a processor and an interface circuit; the interface circuit is configured to: receive code instructions and transmit the code instructions to the processor; and the processor is configured to run the code instructions to perform an operation performed by the terminal device in any one of the foregoing method embodiment and the possible implementations of the method embodiment.

Based on a same concept as that in the foregoing method embodiment, an embodiment of this application further provides a computer-readable storage medium. The computer-readable storage medium stores a computer program. When the program is executed by a computer, a computer is enabled to perform an operation performed by the network device or the terminal device in any one of the foregoing method embodiment and the possible implementations of the method embodiment.

Based on a same concept as that in the foregoing method embodiment, this application further provides a computer program product. When the computer program product is invoked and executed by a computer, the computer may be enabled to implement an operation performed by the network device or the terminal device in any one of the foregoing method embodiment and the possible implementations of the method embodiment.

Based on a same concept as that in the foregoing method embodiment, this application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in wired and/or wireless communication, and the memory (or the storage module) may be configured to store a program. The processor invokes the program to implement an operation performed by the network device or the terminal device in any one of the foregoing method embodiment and the possible implementations of the method embodiment. The chip system may include the chip, or may include the chip and another discrete component, such as a memory (or a storage module) and/or a transceiver (or a communication module).

Based on a same concept as that in the foregoing method embodiment, this application further provides a communication system. The communication system may be configured to implement an operation performed by the network device and the terminal device in any one of the foregoing method embodiment and the possible implementations of the method embodiment.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiment. Details are not described herein again.

In the several embodiments provided in this application, it should be understood that the disclosed system, apparatuses, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. A resource scheduling indication method, comprising:

determining (S401), by a network device, one piece of control information, wherein the one piece of control information comprises resource scheduling indication information of a plurality of pieces of data on different carriers, and the resource scheduling indication information is used to perform resource scheduling on the plurality of pieces of data; and

sending (S402), by the network device, the one piece of control information, to a terminal device.

wherein the resource scheduling indication information comprises hybrid automatic repeat request, HARQ, process information, the HARQ process information comprises second indication information, **characterized in that** the second indication information indicates a HARQ process identifier of one of the plurality of pieces of data, and a HARQ process identifier of another one of the plurality of pieces of data is obtained through calculation based on the HARQ process identifier of the one of the plurality of pieces of data.

2. The method according to claim 1, wherein the resource scheduling indication information further comprises at least one of the following information:

carrier group information corresponding to the different carriers, bandwidth part BWP indication information corresponding to the plurality of pieces of data, transmit power control indication information, modulation and coding scheme indication information, new data indicator information, channel access indication information, time domain resource indication information, and frequency domain resource indication information.

3. The method according to claim 2, wherein when the resource scheduling indication information further comprises the frequency domain resource indication information, the frequency domain resource indication information indicates a set of frequency domain resources of the plurality of pieces of data on the different carriers; or

the frequency domain resource indication information indicates a frequency domain resource of one of the plurality of pieces of data.

4. The method according to claim 3, wherein the frequency resource indication information comprises a first resource indication value RIV; and the first RIV indicates the set of frequency domain resources of the plurality of pieces of data; or the first RIV indicates the frequency domain resource of one of the plurality of pieces of data.

5. The method according to any one of claims 1 to 4, wherein the control information is downlink control information DCI or sidelink control information SCI.

6. A resource scheduling indication method, the method performed by a terminal device and comprising:

receiving (S402), from a network device, one piece of control information, wherein the one piece of control information comprises resource scheduling indication information of a plurality of pieces of data on different carriers, and the resource scheduling indication information is used to perform resource scheduling on the plurality of pieces of data; and

performing (S403) data sending or data receiving based on the one piece of control information,

wherein the resource scheduling indication information comprises hybrid automatic repeat request, HARQ, process information, the HARQ process information comprises second indication information, **characterized in that** the second indication information indicates a HARQ process identifier of one of the plurality of pieces of data, and a HARQ process identifier of another one of the plurality of pieces of data is obtained through calculation based on the HARQ process identifier of the one of the plurality of pieces of data.

7. A communication apparatus, comprising a processor and a memory, wherein the memory is configured to store one or more programs, and the one or more programs comprise computer-executable instructions; and when the apparatus runs, the processor executes the one or more programs stored in the memory, to enable the apparatus to perform the method according to any one of claims 1 to 5.

8. A communication apparatus, comprising a processor and a memory, wherein the memory is configured to store one or more programs, and the one or more programs comprise computer-executable instructions; and when the apparatus runs, the processor executes the one or more programs stored in the memory, to enable the apparatus to perform the method according to claim 6.

9. A communication apparatus (700), comprising a processor (701) and an interface circuit (702), wherein

the interface circuit (702) is configured to: receive code instructions and transmit the code instructions to the processor (701); and

the processor (701) is configured to run the code instructions to perform the method according to any one of claims 1 to 5.

10. A communication apparatus (900), comprising a processor (902) and an interface circuit (901), wherein

the interface circuit (901) is configured to: receive code instructions and transmit the code instructions to the processor (902); and
the processor (902) is configured to run the code instructions to perform the method according to claim 6.

11. A computer-readable storage medium, wherein the computer-readable storage medium stores a computer program; and when the computer program is run, the method according to any one of claims 1 to 5 or the method according to claim 6 is implemented.

**Patentansprüche**

1. Verfahren zur Ressourcenplanungsanzeige, umfassend:

Bestimmen (S401) einer Steuerinformation durch eine Netzwerkvorrichtung, wobei die eine Steuerinformation Ressourcenplanungsanzeigeinformationen für eine Vielzahl von Datenelementen auf verschiedenen Trägern umfasst und die Ressourcenplanungsanzeigeinformationen verwendet werden, um eine Ressourcenplanung für die Vielzahl von Datenelementen durchzuführen; und
Senden (S402) der einen Steuerinformation an eine Endgerätevorrichtung durch die Netzwerkvorrichtung.
wobei die Ressourcenplanungsanzeigeinformationen hybride automatische Wiederholungsanforderung (hybrid automatic repeat request, HARQ)-Prozessinformationen umfassen und die HARQ-Prozessinformationen zweite Anzeigeinformationen umfassen, **dadurch gekennzeichnet, dass** die zweiten Anzeigeinformationen eine HARQ-Prozesskennung eines der Vielzahl von Datenelementen angeben und eine HARQ-Prozesskennung eines anderen der Vielzahl von Datenelementen durch eine Berechnung basierend auf der HARQ-Prozesskennung des einen der Vielzahl von Datenelementen erhalten.

2. Verfahren nach Anspruch 1, wobei die Ressourcenplanungsanzeigeinformationen weiterhin mindestens eine der folgenden Informationen umfassen:
Trägergruppeninformationen, die den unterschiedlichen Trägern entsprechen, Bandbreitenteil-BWP-Anzeigeinformationen, die der Vielzahl von Datenstücken entsprechen, Sendeleistungssteuerunganzeigeinformationen, Modulations- und Kodierungsschemaanzeigeinformationen, Anzeigeinformationen zu neuen Daten, Kanalzugriffanzeigeinformationen, Zeitbereichsressourcenanzeigeinformationen und Frequenzbereichsressourcenanzeigeinformationen.

3. Verfahren nach Anspruch 2, wobei, wenn die Ressourcenplanungsanzeigeinformationen zusätzlich die Frequenzbereichsressourcenanzeigeinformationen umfassen, die Frequenzbereichsressourcenanzeigeinformationen einen Satz von Frequenzbereichsressourcen der Vielzahl von Datenelementen auf den verschiedenen Trägern anzeigen; oder
die Frequenzbereichsressourcenanzeigeinformationen eine Frequenzbereichsressource eines der Vielzahl von Datenstücken angeben.

4. Verfahren nach Anspruch 3, wobei die Frequenzressourcenangabeinformationen einen ersten Ressourcenanzeigewert RIV umfassen; und der erste RIV den Satz von Frequenzbereichsressourcen der Vielzahl von Datenstücken angibt; oder der erste RIV die Frequenzbereichsressource eines der Vielzahl von Datenstücken angibt.

5. Verfahren nach einem der Ansprüche 1 bis 4, wobei die Steuerinformationen Downlink-Steuerinformationen DCI oder Sidelink-Steuerinformationen SCI sind.

6. Verfahren zur Ressourcenplanungsanzeige, wobei das Verfahren von einer Endgerätevorrichtung ausgeführt wird und Folgendes umfasst:

Bestimmen (S402) einer Steuerinformation durch eine Netzwerkvorrichtung, wobei die eine Steuerinformation Ressourcenplanungsanzeigeinformationen für eine Vielzahl von Datenelementen auf verschiedenen Trägern umfasst und die Ressourcenplanungsanzeigeinformationen verwendet werden, um eine Ressourcenplanung für die Vielzahl von Datenelementen durchzuführen; und

Durchführen (S403) eines Datensendens oder Datenempfangs auf der Grundlage der einen Steuerinformation, wobei die Ressourcenplanungsanzeigeinformationen hybride automatische Wiederholungsanforderung (hybrid automatic repeat request, HARQ)-Prozessinformationen umfassen und die HARQ-Prozessinformationen zweite Anzeigeinformationen umfassen, **dadurch gekennzeichnet, dass** die zweiten Anzeigeinformationen eine HARQ-Prozesskennung eines der Vielzahl von Datenelementen angeben und eine HARQ-Prozesskennung eines anderen der Vielzahl von Datenelementen durch eine Berechnung basierend auf der HARQ-Prozesskennung des einen der Vielzahl von Datenelementen erhalten.

7. Kommunikationsvorrichtung, umfassend einen Prozessor und einen Speicher, wobei der Speicher zum Speichern eines oder mehrerer Programme konfiguriert ist und die ein oder mehrere Programme computerausführbare Anweisungen umfassen; und wenn die Vorrichtung ausgeführt wird, führt der Prozessor die ein oder mehrere im Speicher gespeicherten Programme aus, um der Vorrichtung die Durchführung des Verfahrens nach einem der Ansprüche 1 bis 5 zu ermöglichen.

8. Kommunikationsvorrichtung, umfassend einen Prozessor und einen Speicher, wobei der Speicher zum Speichern eines oder mehrerer Programme konfiguriert ist und die ein oder mehrere Programme computerausführbare Anweisungen umfassen; und wenn die Vorrichtung ausgeführt wird, führt der Prozessor die ein oder mehrere im Speicher gespeicherten Programme aus, um der Vorrichtung die Durchführung des Verfahrens nach Anspruch 6 zu ermöglichen.

9. Kommunikationsvorrichtung (700), umfassend die einen Prozessor (701) und eine Schnittstellenschaltung (702), wobei die Schnittstellenschaltung (702) zu Folgendem konfiguriert ist: Empfangen von Codeanweisungen und Übertragen der Codeanweisungen an den Prozessor (701); und der Prozessor (701) dazu konfiguriert ist, die Codeanweisungen auszuführen, um das Verfahren nach neinem der Ansprüche 1 bis 5 durchzuführen.

10. Kommunikationsvorrichtung (900), umfassend die einen Prozessor (901) und eine Schnittstellenschaltung (902), wobei

   die Schnittstellenschaltung (902) zu Folgendem konfiguriert ist: Empfangen von Codeanweisungen und Übertragen der Codeanweisungen an den Prozessor (901); und
   der Prozessor (902) dazu konfiguriert ist, die Codeanweisungen auszuführen, um das Verfahren nach Ansprüche 6 durchzuführen.

11. Computerlesbares Speichermedium, wobei das computerlesbare Speichermedium ein Computerprogramm speichert; und wenn das Computerprogramm ausgeführt wird, das Verfahren nach einem der Ansprüche 1 bis 5 oder das Verfahren gemäß Anspruch 6 umgesetzt wird.

## Revendications

1. Procédé d'indication de planification de ressource, comprenant :

   la détermination (S401), par un dispositif réseau, d'une information de commande, dans lequel l'information de commande comprend des informations d'indication de planification de ressources d'une pluralité d'éléments de données sur différentes porteuses, et les informations d'indication de planification de ressources sont utilisées pour réaliser une planification de ressources sur la pluralité d'éléments de données ; et
   l'envoi (S402), par le dispositif de réseau, de la première information de commande, à un dispositif terminal.
   dans lequel les informations d'indication de planification de ressources comprennent des informations de processus de requête de répétition automatique hybride, HARQ, les informations de processus HARQ comprennent des secondes informations d'indication, **caractérisé en ce que** les secondes informations d'indication indiquent un identifiant de processus HARQ d'un de la pluralité d'éléments de données, et un identifiant de processus HARQ d'un autre de la pluralité d'éléments de données est obtenu par calcul sur la base de l'identifiant de processus HARQ de l'un de la pluralité d'éléments de données.

2. Procédé selon la revendication 1, dans lequel les informations d'indication de planification de ressources comprennent également au moins l'une des informations suivantes :

des informations de groupe de porteuses correspondant aux différentes porteuses, des informations d'indication de partie de bande passante, BWP, correspondant à la pluralité de données, des informations d'indication de commande de puissance de transmission, des informations d'indication de schéma de modulation et de codage, des informations d'indicateur de nouvelles données, des informations d'indication d'accès au canal, des informations d'indication de ressources de domaine temporel et des informations d'indication de ressources de domaine fréquentiel.

3. Procédé selon la revendication 2, dans lequel, lorsque les informations d'indication de planification de ressources comprennent également les informations d'indication de ressources de domaine fréquentiel, les informations d'indication de ressources de domaine fréquentiel indiquent un ensemble de ressources de domaine fréquentiel de la pluralité d'éléments de données sur les différentes porteuses ; ou
les informations d'indication de ressource de domaine fréquentiel indiquent une ressource de domaine fréquentiel d'un de la pluralité d'éléments de données.

4. Procédé selon la revendication 3, dans lequel les informations d'indication de ressources fréquentielles comprennent une première valeur d'indication de ressources, RIV ; et la première RIV indique l'ensemble de ressources de domaine fréquentiel de la pluralité d'éléments de données ; ou la première RIV indique la ressource de domaine fréquentiel d'un de la pluralité d'éléments de données.

5. Procédé selon l'une des revendications 1 à 4, dans lequel les informations de commande sont des informations de commande de liaison descendante, DCI, ou des informations de commande de liaison latérale, SCI.

6. Procédé d'indication de planification de ressources, le procédé étant réalisé par un dispositif terminal et comprenant :

la réception (S402), en provenance d'un dispositif réseau, d'une information de commande, dans lequel l'information de commande comprend des informations d'indication de planification de ressources d'une pluralité d'éléments de données sur différentes porteuses, et les informations d'indication de planification de ressources sont utilisées pour réaliser une planification de ressources sur la pluralité d'éléments de données ; et
la réalisation (S403) d'un envoi de données ou d'une réception de données sur la base d'une information de commande,
dans lequel les informations d'indication de planification de ressources comprennent des informations de processus de requête de répétition automatique hybride, HARQ, les informations de processus HARQ comprennent des secondes informations d'indication, **caractérisé en ce que** les secondes informations d'indication indiquent un identifiant de processus HARQ d'un de la pluralité d'éléments de données, et un identifiant de processus HARQ d'un autre de la pluralité d'éléments de données est obtenu par calcul sur la base de l'identifiant de processus HARQ de l'un de la pluralité d'éléments de données.

7. Appareil de communication comprenant un processeur et une mémoire, dans lequel la mémoire est configurée pour stocker un ou plusieurs programmes, et les un ou plusieurs programmes comprennent des instructions exécutables par ordinateur ; et lorsque l'appareil est en marche, le processeur exécute les un ou plusieurs programmes stockés dans la mémoire, pour permettre à l'appareil de réaliser le procédé selon l'une quelconque des revendications 1 à 5.

8. Appareil de communication comprenant un processeur et une mémoire, dans lequel la mémoire est configurée pour stocker un ou plusieurs programmes, et les un ou plusieurs programmes comprennent des instructions exécutables par ordinateur ; et lorsque l'appareil est en marche, le processeur exécute les un ou plusieurs programmes stockés dans la mémoire, pour permettre à l'appareil de réaliser le procédé selon la revendication 6.

9. Appareil de communication (700), comprenant un processeur (701) et un circuit d'interface (702), dans lequel

le circuit d'interface (702) est configuré pour : recevoir des instructions de code et transmettre les instructions de code au processeur (701) ; et
le processeur (701) est configuré pour exécuter les instructions de code afin de réaliser le procédé selon l'une quelconque des revendications 1 à 5.

10. Appareil de communication (900), comprenant un processeur (902) et un circuit d'interface (901), dans lequel

le circuit d'interface (901) est configuré pour : recevoir des instructions de code et transmettre les instructions de code au processeur (902) ; et
le processeur (902) est configuré pour exécuter les instructions de code afin de réaliser le procédé selon la revendication 6.

11. Support de stockage lisible par ordinateur, dans lequel le support de stockage lisible par ordinateur stocke un programme informatique ; et lorsque le programme informatique est exécuté, le procédé selon l'une des revendications 1 à 5 ou le procédé selon la revendication 6 est mis en œuvre.

Channel bandwidth [MHz]

Configured bandwidth [RB]

Channel edge

Resource block

Channel edge

Guard band

Transmission bandwidth

Guard band

FIG. 1

Carrier 1 (carrier 1)    Carrier 2 (carrier 2)    Carrier 3 (carrier 3)

BWP 1

BWP 2

FIG. 2

FIG. 3

FIG. 4

Carrier 1 (carrier 1)  Carrier 2 (carrier 2)  Carrier 3 (carrier 3)

Resource grid offset

BWP 1

BWP 2

FIG. 5

Start resource
block

End resource
block

| 0 | 1 | 2 | 3 | 4 | 5 | ... | L–2 | L–1 |

L

Carrier 1

FIG. 6A

Arrow 1  Arrow 2

Carrier 1 (carrier 1)  Carrier 2 (carrier 2)  Carrier 3 (carrier 3)

FDRA

BWP 2

FIG. 6B

700

Resource scheduling indication apparatus

Processing unit 701

Communication unit 702

FIG. 7

800

Communication apparatus

Transceiver 802

Processor 801

Memory 803

FIG. 8

900

Resource scheduling indication apparatus

Communication unit — 901

Processing unit — 902

FIG. 9

— 1000

Communication apparatus

Transceiver — 1001

Processor — 1002

Memory — 1003

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014044085 A1

- CN 102209374 B